# EUROPEAN PATENT APPLICATION

(11) **EP 3 460 549 A1**
(43) Date of publication of application: **27.03.2019**
(21) Application number: 18195719.2
(22) Date of filing: 20.09.2018
(51) Int. Cl.: G02B 6/38, G01B 11/27

(54) **TUNABLE FIBER OPTIC CONNECTORS, FIBER OPTIC CABLE ASSEMBLIES INCLUDING THE SAME, AND TUNING METHODS**

(30) Priority: 20.09.2017 US 201762561185 P; 29.09.2017 US 201762565172 P
(71) Applicant: Corning Optical Communications LLC, Hickory, NC 28601 (US)
(72) Inventor: ROSSON, Joel Christopher, Hickory, NC 28601 (US)
(74) Representative: Sadler, Peter Frederick

(57) **Abstract**

A fiber optic connector comprises a ferrule configured to receive an optical fiber, a ferrule holder configured to be secured to the ferrule, a housing body for receiving and retaining the ferrule holder, and a housing cap that includes an opening for accommodating the ferrule, at least one sidewall, and a latch arm extending from the at least one sidewall. The housing cap can be secured to the housing body in one of several possible orientations relative to a longitudinal axis of the housing body to allow the fiber optic connector to be tuned. Cable assemblies and methods including the fiber optic connector are also disclosed.

## Description

### CROSS-REFERENCE TO RELATED APPLICATIONS

This application claims the benefit of priority of U.S. Provisional Patent Application Serial No. 62/565172, filed on September 29, 2017, and U.S. Provisional Patent Application Serial No. 62/561185, filed on September 20, 2017. The content of each of these applications is fully incorporated herein by reference.

### FIELD

The present disclosure relates to fiber optic connectors, and in particular relates to fiber optic connectors that facilitate tuning, fiber optic cable assemblies including such connectors, and related methods.

### BACKGROUND

Optical fibers are useful in a wide variety of applications, including the telecommunications industry for voice, video, and data transmissions. In a telecommunications system that uses optical fibers, there are typically many locations where fiber optic cables carrying the optical fibers connect to equipment or other fiber optic cables. To conveniently provide these connections, fiber optic connectors are often provided on the ends of fiber optic cables. The process of terminating individual optical fibers from a fiber optic cable is referred to as "connectorization." Connectorization can be done in a factory, resulting in a "pre-connectorized" or "pre-terminated" fiber optic cable, or the field (e.g., using a "field-installable" fiber optic connector).

Regardless of where installation occurs, a fiber optic connector typically includes a ferrule with one or more bores that receive one or more optical fibers. The ferrule supports and positions the optical fiber(s) with respect to a housing of the fiber optic connector. Thus, when the housing of the fiber optic connector is mated with another connector (e.g., in an adapter), an optical fiber in the ferrule is positioned in a known, fixed location relative to the housing. This allows an optical connection to be established when the optical fiber is aligned with another optical fiber provided in the mating connector.

An important property of a fiber optic connector is its ability to provide an efficient optical connection, i.e., an optical connection whereby the optical loss (also called "insertion loss") due to the connection is minimal. This efficiency is referred to in the art as the "coupling efficiency."

In single-fiber connectors, coupling efficiency is largely influenced by how well the core of the optical fiber is centered in the ferrule. This positional relationship between the center of the fiber core and the true center of the ferrule (e.g., a geometric center based on an outer surface of the ferrule) is sometimes referred to as "core-to-ferrule" ("CTF") concentricity. Offset between the center of the fiber core and the true center of the ferrule is a result of a core-to-ferrule concentricity error, and the offset itself may be referred to as core-to-ferrule eccentricity (CTFE).

One way to increase coupling efficiency is to "tune" fiber optic connectors in the factory when completing a cable assembly. The tuning process involves measuring the core-to-ferrule concentricity error, which includes determining both the magnitude of the offset and its direction using a polar coordinate system. The ferrule-fiber sub-assembly is then rotated or otherwise oriented relative to connector components so that the fiber core is positioned in a desired angular sector (e.g., a desired quadrant) of the polar coordinate system.

There are both contact and non-contact methods for measuring core-to-ferrule concentricity error and tuning. The contact methods typically involve making a connection to a master connector on the end of a master jumper (also referred to as "reference jumper"). The ferrules of the master connector and the connector being tuned ("device under test" or "DUT connector") have end faces that come into contact, which has the potential to contaminate or even damage the DUT connector. Moreover, the use of master jumpers adds costs to manufacturing processes. Non-contact methods for measuring core-to-ferrule concentricity error typically require a substantial portion of the outer surface of the ferrule to be exposed. Because an inner housing in most connector designs covers substantially all (e.g., about 90%) of the ferrule length, these measurement methods normally require the core-to-ferrule concentricity to be measured without the connector housing in place. Accommodating such a requirement in cable assembly processes can add costs, complexities, and/or inefficiencies.

### SUMMARY

An embodiment of the disclosure includes a fiber optic connector for installation on a fiber optic cable. The fiber optic connector comprises a ferrule having front portion defining a ferrule front end, a back portion defining a ferrule back end, and an axial bore for receiving an optical fiber of the fiber optic cable. The fiber optic connector also comprises a ferrule holder configured to be secured to the back portion of the ferrule and a housing body for receiving the ferrule holder. The housing body is shaped to position the ferrule holder in the housing body with the ferrule front end extending beyond the housing body. The fiber optic connector also comprises a housing cap configured to be secured to the housing body and including: an opening for accommodating the ferrule, at least one sidewall, and a latch arm extending from the at least one sidewall. The housing body and the housing cap are shaped so that the housing cap can be received by the housing body in several orientations of the housing cap relative to a longitudinal axis of the housing body, with the latch arm extending over a different side of the housing body in each of the several orientations.

Another embodiment of the disclosure is a fiber optic cable assembly that includes a fiber optic cable having at least one optical fiber, and the fiber optic connector as described above installed on the at least one optical fiber.

Another embodiment of the disclosure is a fiber optic cable assembly comprising a fiber optic cable that includes at least one optical fiber, and a fiber optic connector installed on the at least one optical fiber. The fiber optic connector comprises a ferrule having a ferrule front end, a ferrule back end, and an axial bore in which an optical fiber of the cable is secured. The fiber optic connector also comprises a housing body in which the ferrule is partially received. The housing body has a front-end section with at least four sides. The ferrule front end extends beyond the front-end section of the housing body, and the ferrule back end is positioned within the housing body. A housing cap is secured to the front-end section of the housing body in one of several possible orientations of the housing cap relative to a longitudinal axis of the housing body. The housing cap includes an opening through which the ferrule extends, at least one sidewall, and a latch arm extending from the at least one sidewall. The housing body is shaped to receive the housing cap with the latch arm extending over a different one of the at least four sides of the front-end section of the housing body in each of the several possible orientations.

Methods of tuning a fiber optic connector during the manufacture of a fiber optic cable assembly are also disclosed. One such method comprises securing a ferrule of the fiber optic connector to an optical fiber of a fiber optic cable, wherein the ferrule includes a ferrule front end, a ferrule back end, and an axial bore in which the optical fiber is received. The method also comprises forming a sub-assembly that includes a housing body in which the ferrule back end is retained, wherein the ferrule front end extends beyond a front end of the housing body in the sub-assembly. A position of a core of the optical fiber relative to a center of the ferrule is determined before or after forming the sub-assembly. A housing cap is then secured to the housing body in one of several possible orientations of the housing cap relative to a longitudinal axis of the housing body. Securing the housing cap includes selecting the one of the several possible orientations based on the position of the core of the optical fiber. Additionally, the housing cap includes a latch arm that extends over a different side of the housing body in each of the several possible orientations.

Advantages and additional features are set out in the Detailed Description that follows, and in part will be readily apparent to those skilled in optical connectivity. It is to be understood that both the foregoing general description and the following Detailed Description are merely exemplary, and are intended to provide an overview or framework to understand the nature and character of the claims.

### BRIEF DESCRIPTION OF THE DRAWINGS

The accompanying drawings are included to provide a further understanding, and are incorporated in and constitute a part of this specification. The drawings illustrate one or more embodiment(s), and together with the Detailed Description serve to explain principles and operation of the various embodiments. As such, the disclosure will become more fully understood from the following Detailed Description, taken in conjunction with the accompanying Figures, in which:
FIG. 1 is a perspective view of an example of a fiber optic connector having a known design;
FIG. 2 is a perspective view of one example of a fiber optic connector according to this disclosure, with the fiber optic connector shown in an assembled state and schematically as being installed on a cable to form a fiber optic cable assembly according to this disclosure;
FIG. 3 is an exploded perspective view of the fiber optic connector of FIG. 2;
FIG. 4 is a perspective view of a ferrule of the fiber optic connector installed on an optical fiber;
FIG. 5 is a perspective view of the fiber optic connector of FIG. 2 in a partially assembled state, with a ferrule, ferrule holder, and housing body of the fiber optic connector forming a sub-assembly, and with a housing cap of the fiber optic connector remaining separate from the sub-assembly but having a possible orientation for being secured to the housing body;
FIG. 6 is a front elevation of the sub-assembly of FIG. 5, illustrating how the sub-assembly can be divided into quadrants so that a measured core position of an optical fiber can be assigned to one of the quadrants;
FIG. 7 is a perspective view of a portion of the fiber optic connector of FIG. 2, but illustrates the housing body of the fiber optic connector as being transparent to better appreciate how the fiber optic connector may be assembled;
FIG. 8A is a scatter plot of core-to-ferrule concentricity based on Monte Carlo simulations, illustrating a substantially uniform distribution of core-to-ferrule concentricity measurements with angle (i.e., about the z-axis), and showing an example first quadrant Q1;
FIG. 8B is a scatter plot of the core-to-ferrule concentricity for tuned fiber optic connectors, wherein the housing cap is oriented with respect to the housing body of each fiber optic connector so that the core locations of the respective optical fibers are all located in the first quadrant; and
FIGS. 9, 10, and 11 are perspective views similar to FIG. 5, but each illustrates a different possible orientation of the housing cap relative to a longitudinal axis of the housing body.

### DETAILED DESCRIPTION

Reference is now made in detail to various embodiments of the disclosure, examples of which are illustrated in the accompanying drawings. Whenever possible, the same or like reference numbers and symbols are used throughout the drawings to refer to the same or like parts. The drawings are not necessarily to scale, and one skilled in the art will recognize where the drawings have been simplified to illustrate the key aspects of the disclosure.

The claims as set out below are incorporated into and constitute part of this Detailed Description.

Cartesian coordinates are shown in some of the Figures for the sake of reference and are not intended to be limiting as to direction or orientation.

In general, the description below relates to fiber optic connectors that facilitate tuning when forming a cable assembly that includes such fiber optic connectors. Although tuning may be generally known (as acknowledged above), the fiber optic connectors provided by this disclosure have unique designs that facilitate tuning in ways not previously contemplated. To better appreciate this aspect and advantages provided by this disclosure, an example of a known design for a fiber optic connector will first be described, followed by a description of an exemplary new design according to this disclosure.

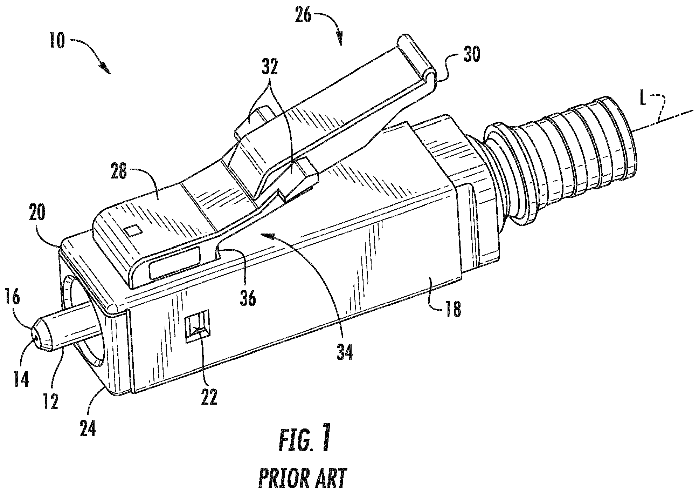

To this end, FIG. 1 illustrates an example of a fiber optic connector 10 ("connector 10") having a known design, and specifically a known design for an LC connector. The connector 10 includes a ferrule 12 configured to support an optical fiber (not shown in FIG. 1) extending in a generally along a longitudinal axis L through an axial bore 14 of the ferrule 12. A front portion of the ferrule 12 extends through a housing cap 24 coupled to a housing body 18. The housing body 18 may also be referred to as a "connector body 18" or simply "body 18," and the housing cap 24 may simply be referred to as "cap 24." The ferrule 12 extends from a ferrule holder 22 (largely hidden from view in FIG. 1) that is retained within the body 18. A spring (not shown) biases the ferrule holder 22 forward within the body 18 so that the front portion of the ferrule 12 extends through the cap 24. The front portion defines a ferrule front end 16 that presents the optical fiber extending through the axial bore 14 for optical coupling with a mating component (e.g., another fiber optic connector).

The connector 10 further includes a latch arm 26 extending outwardly and rearwardly from (e.g., in a slanted direction relative to) a portion of the body 18. In this regard, the latch arm 26 has a proximal end 28 coupled to the body 18 and a distal end 30 spaced from the body 18, with the body 18 and the latch arm 26 being separated from one another and defining a space 34 therebetween. An intermediate portion of the latch arm 26 includes cantilever latch tabs 32. The distal end 30 of the latch arm 26 may be depressed toward the body 18 to disengage the connector 10 from another structure, such as an adapter or a dust cap (neither shown in FIG. 1).

As can be appreciated, the latch arm 26 renders the connector 10 asymmetric. Most adapters include ports or receptacles shaped to receive in the connector 10 in only one orientation. In other words, there is only one orientation of the connector 10 relative to the adapter that results in the connector 10 being properly inserted into and coupled to the adapter, thereby ensuring proper mating with another connector inserted from an opposite side of the adapter. The latch arm 26 effectively serves as a reference feature (or "alignment feature" or "key") defining the orientation of the connector 10. Therefore, tuning the connector 10 involves adjusting the direction of the core-to-ferrule eccentricity (i.e., the angular position of the fiber core in a polar coordinate system) in relation to this reference/alignment feature (directly or indirectly).

Tuning the connector 10 can be a challenge for the reasons mentioned in the Background above. As can be appreciated from FIG. 1, tuning the connector 10 after assembly may be limited to contact-based methods using master jumpers due the limited extension of the ferrule 12 beyond the body 18. There may be insufficient access to the ferrule 12 for equipment, instruments, or systems designed to measure the core-to-ferrule eccentricity (CTFE) without contacting the ferrule front end 16 (or without contacting the ferrule 12 altogether). Post-assembly tuning also requires designing the body 18 and ferrule holder 22 to allow relative rotation in some situations, such as when the ferrule 12 in a retracted position within the body 18, but to prevent rotation in other situations, such as when the ferrule 12 is in a normal, forward position (e.g., due to the spring bias mentioned above) within the body 18. This could lead to a risk of the connector 10 inadvertently becoming "untuned" during handling or the like.

Tuning the connector 10 during assembly, as mentioned in the Background above, can add costs, complexities, and/or inefficiencies. For example, it may be necessary to prepare a sub-assembly including the ferrule 12 secured to an optical fiber, determine the CTFE in relation to a reference feature of the sub-assembly (e.g., on the ferrule 12 or, if included in the sub-assembly, the ferrule holder 22), and ensure that the sub-assembly is then inserted into the body 18 with the reference feature of the sub-assembly properly positioned in relation to the latch arm 26. Cable assembly processes involve many different steps that can be automated and optimized in many different ways, and in some processes it may be desirable to pre-assemble the ferrule 12, ferrule holder 22, and body 18 before an optical fiber is inserted into and secured to the ferrule 12.

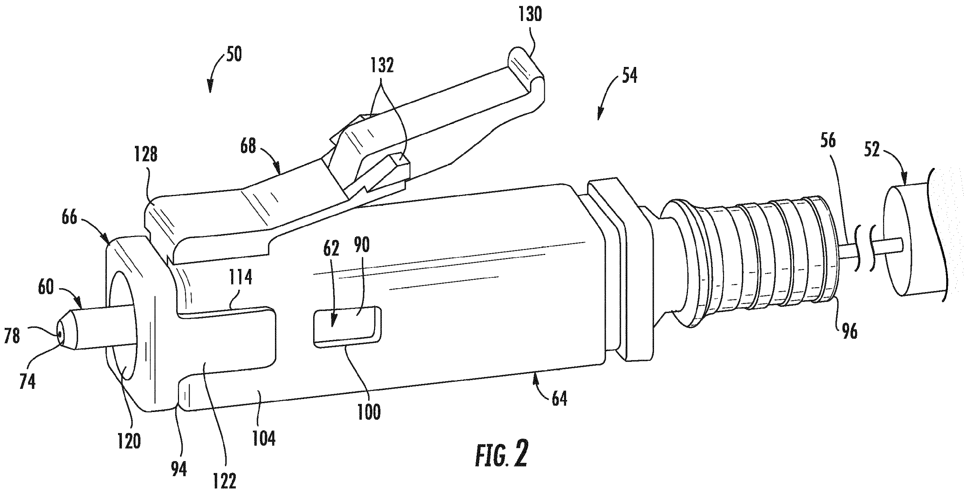

Now that the connector 10 has been described, reference will now be made to an exemplary embodiment of the present disclosure. To this end, FIG. 2 illustrates a fiber optic connector 50 that, like the connector 10, is a design for an LC connector. This means that the connector 10 and the connector 50 have in common at least the minimum physical attributes required by LC connector intermatability standards, such as IEC 61754-20 or TIA/EIA-604-10. It can be seen, however, that components of the connector 50 are designed and assembled differently than components of the connector 10 to provide the physical attributes associated with LC connectors. Additionally, it will be appreciated that the principles disclosed may be applied to other connector designs; LC connectors are merely used in this disclosure for convenience to allow a comparison to an exemplary known connector design and tuning methods.

Before describing the connector 50, note that FIG. 2 schematically illustrates a fiber optic cable 52 on which the connector 50 is installed. The cable 52 terminated with the connector 50 constitutes a fiber optic cable assembly 54 ("cable assembly 54"). In the embodiment shown, the cable 52 includes a single optical fiber 56 on which the connector 50 is installed (i.e., the optical fiber 56 is terminated by the connector 50). It will be appreciated, however, that the connector 50 may be used in connection with many different cable designs, including designs with multiple-and in some cases many-optical fibers, with some or all of the optical fibers terminated with a respective connector similar to the connector 50. The connector 50 is shown without the cable 52 in subsequent figures because illustrating the cable 52 is not necessary for a proper understanding of the connector 50 and cable assemblies including the connector 50 (e.g., the cable assembly 54).

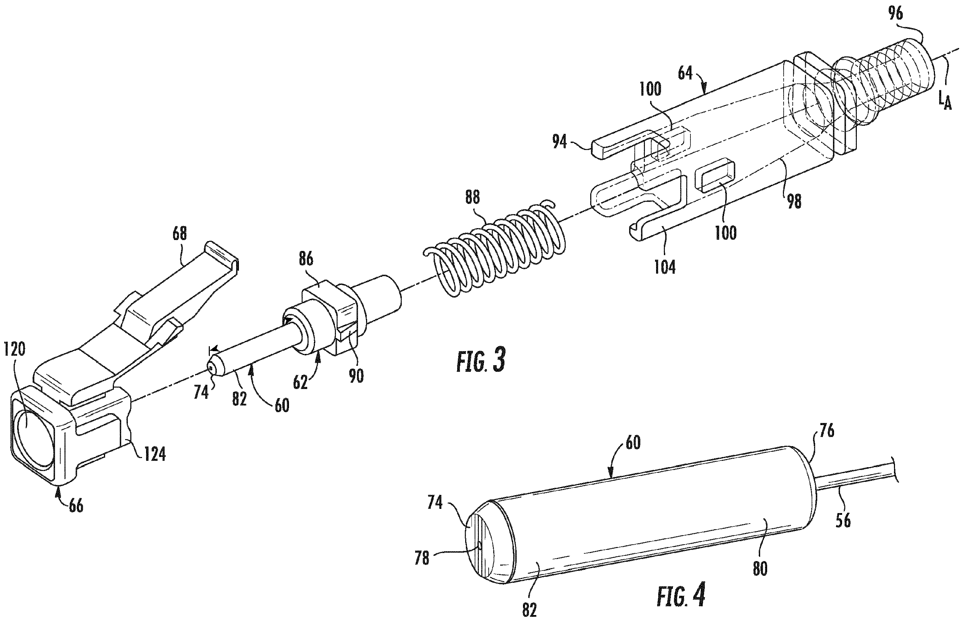

With reference to both FIGS. 2 and 3, the connector 50 includes a ferrule 60, a ferrule holder 62 from which the ferrule 60 extends, a housing body 64 in which the ferrule holder 62 is received, and a housing cap 66 secured to the housing body 64. The housing cap 66 includes a latch arm 68, which functions in the same manner as the latch arm 26 (FIG. 1) even though the latch arm 68 is part of the housing cap 66 rather than the housing body 18 (in contrast to the connector 10). As will be discussed in greater detail below, the housing cap 66 is configured to be secured to the housing body 64 in one of several possible orientations of the housing cap 66 relative to a longitudinal axis L_{A} of the housing body 64, with the latch arm 68 extending over a different side of the housing body 64 in each of the several possible orientations.

FIG. 4 illustrates the ferrule 60 in further detail, with the ferrule 60 being secured to the optical fiber 56 of the cable 52 (FIG. 2). The ferrule 60 includes a ferrule front end 74, a ferrule back end 76, and an axial bore 78 extending between the ferrule front end 74 and ferrule back end 76. The optical fiber 56 includes a stripped section ("bare fiber section"; not labeled) inserted into the axial bore 78 and secured to the ferrule 60 using a bonding agent, such as epoxy. Although FIG. 4 illustrates the optical fiber 56 being secured to the ferrule 60 without the ferrule holder 62 (FIG. 3) being present, in some embodiments the ferrule holder 62 may be secured to the ferrule 60 before the optical fiber 56 is inserted into and secured to the ferrule 60. The ferrule holder 62 may be secured to the ferrule 60 by a press-fit, over-molding, or any other suitable technique.

Regardless of when or how the ferrule holder 62 is secured to the ferrule 60, the ferrule holder 62 is only secured to a back portion 80 of the ferrule 60 that defines the ferrule back end 76. Referring back to FIG. 3, a front portion 82 of the ferrule 60 that defines the ferrule front end 74 extends from the ferrule holder 62. The ferrule holder 62 includes a passage that allows the optical fiber 56 to extend into the axial bore 78 of the ferrule 60 at the ferrule back end 76. In the embodiment shown, the ferrule holder 62 includes a flange portion 86 defining a rearward-facing surface that serves as a seat for a spring 88 that biases the ferrule holder 62 (and the ferrule 60 that is secured to the ferrule holder 62) forwardly within the housing body 64. The flange portion 86 also includes catches or shoulders 90 for engaging the housing body 64, as will be discussed in greater detail below.

Still referring to FIG. 3, the housing body 64 includes a front end 94, a back end 96, and an internal cavity 98 between the front end 94 and back end 96. The internal cavity 98 is shaped to receive the spring 88 and ferrule holder 62. In the embodiment shown, the ferrule holder 62 and spring 88 are inserted into the internal cavity 98 via the front end 94 of the housing body 64. There is a slight interference fit between the shoulders 90 on the flange portion 86 of the ferrule holder 62 and the internal cavity 98 such that the housing body 64 flexes slightly to accommodate the insertion of the ferrule holder 62. The ferrule holder 62 is inserted into the internal cavity 98 until the shoulders 90 engage (e.g., are received in) windows 100 on the housing body 64. By this point, the spring 88 has been compressed due to internal geometry of the housing body 64 (e.g., a tapered portion or wall of the internal cavity 98) that limits the extent to which the spring 88 can be inserted. The spring 88 biases the ferrule holder 62 toward a front-end section 104 of the housing body 64 that is defined between the windows 100 and the front end 94 of the housing body 64, and the engagement between the shoulders 90 on the flange portion 86 of the ferrule holder 62 and the windows 100 of the housing body 64 retain the ferrule holder 62 within the housing body 64. To this end, the shoulders 90 and windows 100 can be considered as complementary engagement features.

In alternative embodiments, the housing body 64 may be configured to receive and retain the ferrule holder 62 in a different manner. This includes embodiments where the housing body 64 is configured so that the ferrule holder 62 can be inserted into the internal cavity 98 via the back end 96 of the housing body 64. Indeed, there are many different ways the housing body 64 and ferrule holder 62 can be designed to result in the ferrule holder 62 being received and positioned within the housing body 64 so that the ferrule 60 extends beyond the front end 94 of the housing body 64.

The same consideration applies with respect to the housing body 64 restricting rotation of the ferrule holder 62 relative to the longitudinal axis L_{A}. In particular, in the embodiment shown, the flange portion 86 of the ferrule holder 62 has a square-shaped profile when viewed in a plane perpendicular to the longitudinal axis L_{A}, and at least a portion of the internal cavity 98 has a complementary profile. This results in the housing body 64 restricting rotation of the ferrule holder 62 (and, therefore, the ferrule 60 that is secured to the ferrule holder 62) relative to the longitudinal axis L_{A} of the housing body 64. In effect, the geometries substantially rotationally fix the ferrule holder 62 relative to the housing body 64 about the longitudinal axis L_{A}. For example, the ferrule holder 62 may be restricted from rotating more than 10 degrees, more than 5 degrees, or completely (i.e., no rotation permitted) relative to the housing body 64. Other ways of designing the housing body 64 and ferrule holder 62 to substantially prevent relative rotation about the longitudinal axis L_{A} will be appreciated.

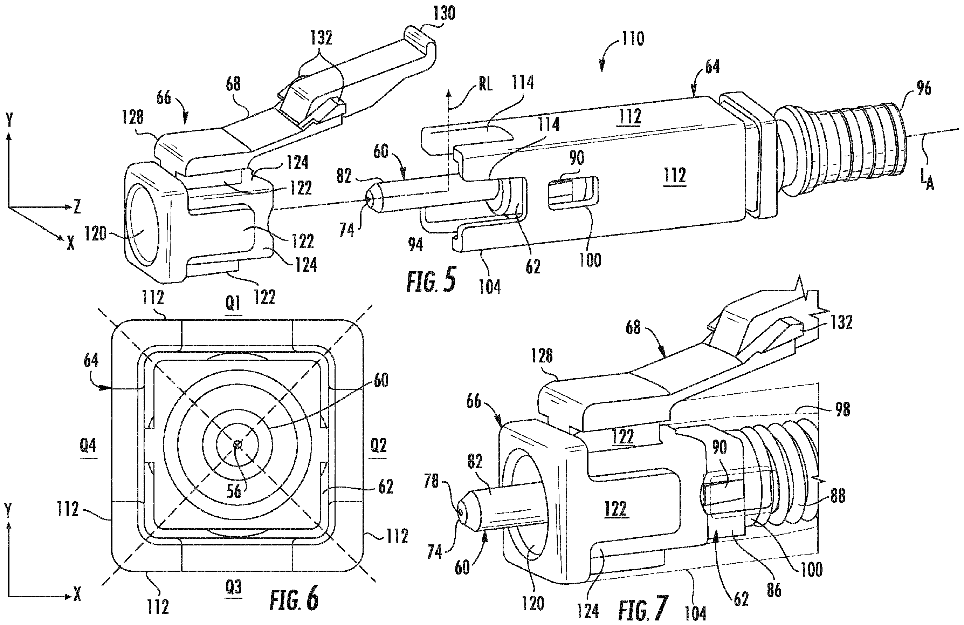

FIG. 5 illustrates a sub-assembly 110 comprising the housing body 64, ferrule holder 62, and ferrule 60, assembled in the manner described above. As previously mentioned, although the cable 52 (FIG. 2) is not shown in FIG. 5, the cable 52 may be present (i.e., the sub-assembly 110 may be installed on the cable 52 by this point). A portion of the housing body 64 that includes at least the front-end section 104 has a substantially square profile when viewed in a plane perpendicular to the longitudinal axis L_{A}. Four sides 112 of the housing body 64 render at least the front-end section 104 "quad" symmetric (or "four-fold" symmetric) about the longitudinal axis L_{A}, which can also be seen in FIG. 6. In the embodiment shown, the front-end section 104 includes four slots 114 extending from the front end 94 of the housing body 64. There is one of the slots 114 in each of the four sides 112 of the housing body 64 to maintain the four-fold symmetry. The slots 114 enable the housing body 64 to receive the housing cap 66 in a similar manner in four different orientations of the housing cap 66 relative to the longitudinal axis L_{A}.

In particular, and still referring to FIG. 5, the housing cap 66 includes an opening 120 for accommodating the ferrule 60 and four sidewalls 122. The latch arm 68 extends from one of the sidewalls 122. More specifically, in the embodiment shown, each of the sidewalls 122 includes a shoulder or tab 124, and the latch arm 66 extends from one of the tabs 124. Each of the tabs 124 is shaped to be received in the slots 114 of the front-end section 104 of the housing body 64. This can be better appreciated with reference to FIG. 7, which illustrates the housing cap 66 secured to the housing body 64. The front-end section 104 of the housing body 64 in this embodiment is received over portions of the sidewalls 124 that do not include the tabs 122. Note that the housing body 64 is only outlined in FIG. 7 to better show the overlap between the front-end section 104 of the housing body 64 and portions of the sidewalls 124.

There are a number of techniques to secure the housing cap 66 to the housing body 64. For example, the housing cap 66 may be secured to the housing body 64 by an adhesive between confronting surfaces of the two components. In other embodiments, the housing cap 66 and housing body 64 may be designed to provide a friction fit between the two components, or include features that cooperate to provide an interference fit between the two components. In yet other embodiments, a fusion joint may be used to secure the housing cap 66 to the housing body 64. For example, confronting surfaces of the housing cap 66 and housing body 64 may be fused (i.e., welded) together using laser energy, ultrasonic energy, or other forms of energy. As a specific example, through-transmission laser welding may be used to fuse the housing cap 66 to the housing body 64. In such embodiments (and other embodiments, if desired), the housing body 64 may comprise respective first and second materials having different energy absorption properties. The first material may, for example, be largely transmissive to laser energy at a particular wavelength, and the second material may be largely absorptive to the laser energy at the same wavelength.

Although various examples of techniques for securing the housing cap 66 to the housing body 64 have been mentioned, and even further techniques can be appreciated, the techniques are not necessarily mutually exclusive. In other words, embodiments are possible that use two or more different techniques to secure the housing cap 66 to the housing body 64.

In the assembled state of the connector 50, the latch arm 68 functions in the same manner as the latch arm 26 (FIG. 1) of the connector 10. Thus, although a proximal end 128 of the latch arm 68 is coupled to the housing cap 66, a distal end 130 of the latch arm 66 remains spaced from the housing body 64. An intermediate portion of the latch arm 66 includes at least one latch tab 132 (two are provided in the embodiment shown) for engaging another structure, such as an adapter or dust cap (neither are shown in the FIG. 5). The latch arm 68 of the housing cap 66 also effectively serves as a reference feature (or "alignment feature" or "key") that renders the connector 50 asymmetric and defines the orientation of the connector 50. Therefore, tuning the connector 50 still involves adjusting the direction of the CTFE in relation to the latch arm 66 (directly or indirectly).

Referring back to FIG. 5, it can be seen how the front portion 82 of the ferrule 60 can be easily accessed in the sub-assembly 110. There is a significant amount of the ferrule 60 extending beyond the front end 94 of the housing body 64, and an even more significant amount of the ferrule 60 exposed when taking into account the slots 114 in the front-end section 104 of the housing body 64. Either or both of these aspects may facilitate use of equipment/instruments/systems for measuring CTFE that require access to the ferrule 60. For example, the ferrule 60 can be considered to have a front portion length L_{FP} (FIG. 3) defined between the ferrule front end 74 and ferrule holder 62, measured in a direction parallel to a central axis of the ferrule 60 (which may correspond to the longitudinal axis L_{A} when the connector 50 is assembled). The housing body 64 in the embodiment shown is shaped so that the entire front portion length L_{FP} is exposed (i.e., directly visible) when viewed in a direction perpendicular to the longitudinal axis L_{A} and through one of the slots 114 in the front-end section 104. In alternative embodiments, the housing body 64 may be shaped so that the front portion length L_{FP} of the ferrule 60 is less exposed than the embodiment shown when viewed in the same manner (e.g., at least 75% of the front portion length L_{FP} may be exposed in some embodiments, or at least 50% of the front portion length L_{FP} may be exposed). Even in such embodiments, however, the exposed front portion length L_{FP} may facilitate the use of equipment/instruments/systems for measuring CTFE compared to conventional designs.

Given that the ferrule holder 62 and ferrule 60 are restricted from rotating relative to the housing body 64 about the longitudinal axis L_{A}, the direction of the CTFE can be identified relative to some reference on housing body 64, e.g., relative to a reference line RL that runs in the y-direction ("twelve o'clock"), as shown in FIG. 5. Additionally, FIG. 6 illustrates an example of how a measurement of CTFE can establish the location of a core of the optical fiber 56 to be within one of four quadrants Q of the housing body 64, namely quadrants Q1, Q2, Q3 and Q4, with each quadrant spanning an angular range of 90 degrees. Because the orientation of the housing cap 66 ultimately defines the orientation of the connector 50, the housing cap 66 can be secured to the housing body 64 in the orientation (of the different possible orientations) that results in the core of the optical fiber 56 being positioned in a desired quadrant of the assembled connector 50.

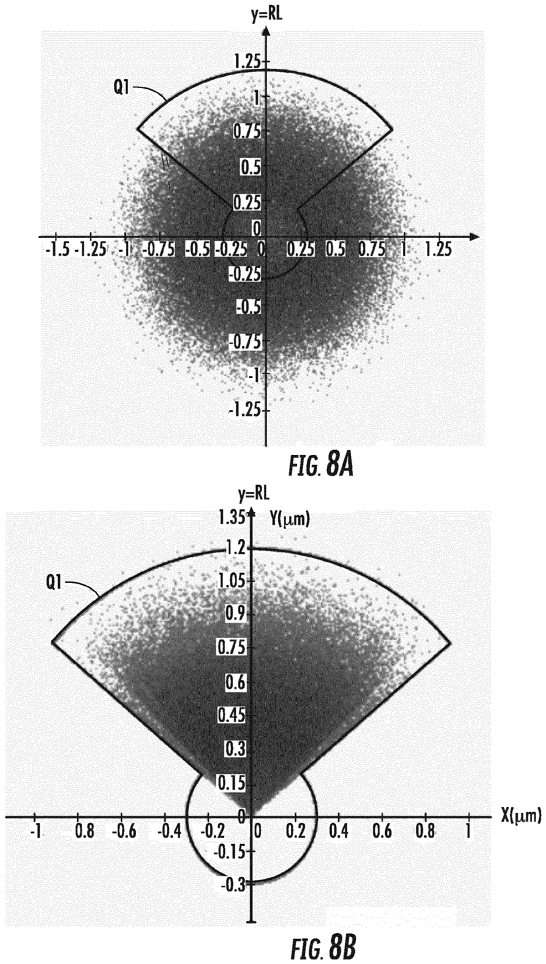

FIG. 8A is a scatter plot of CTFE. The points in the scatter plot have (r, θ) coordinates, wherein r coordinate is the magnitude of the core offset measured relative to the ferrule center, while the θ coordinate shows the angular direction of the offset relative to reference line RL. Cartesian x and y-axes are also shown, with the units in microns (µm). The first quadrant Q1 is shown in the plot for reference.

The data points in the plot were created using a Monte-Carlo simulation of CTFE based on three major sources of error: a core/cladding offset in the optical fiber 56; an offset of the optical fiber 56 within the axial bore 78 of the ferrule 60; and an offset of the axial bore 78 relative to a true center (i.e., a geometric center) of the ferrule 60. The plot shows a relatively uniform distribution of the data with angular coordinate θ. As can be seen from the plot of FIG. 8A, the position of the core of the optical fiber 56 will fall into one of the four quadrants Q associated with housing body 64.

Thus, once the location of the core of the optical fiber 56 in a given quadrant Q is determined, the question becomes which of the possible orientations of the housing cap 66 should have to "tune" the resulting connector 100, i.e., to increase or maximize the coupling efficiency or to reduce or minimize the insertion loss of the resulting cable assembly 54. If the selection from the possible orientations of the housing cap 66 relative to the longitudinal axis L_{A} of the housing body 64 is made random when forming a set of cable assemblies, the coupling efficiency between any two pairs of the cable assemblies in the set will vary over a relatively large range. As can be seen in the plot of FIG. 8A, this is because the fiber core locations can range from being in the same quadrant, which results in a relatively high coupling efficiency, to being in opposite quadrants so as to result in a relatively low coupling efficiency.

Thus, in order to maximize the coupling efficiency for a set of the cable assemblies 54, each cable assembly 54 can have a tuned configuration whereby the housing cap 66 is secured to the housing body 64 in the orientation (of the four possible orientations) that results in the quadrant Q in which fiber core is located being in the same position relative to the latch arm 68 of the housing cap 66 (e.g., immediately below / closest to the latch arm 68.

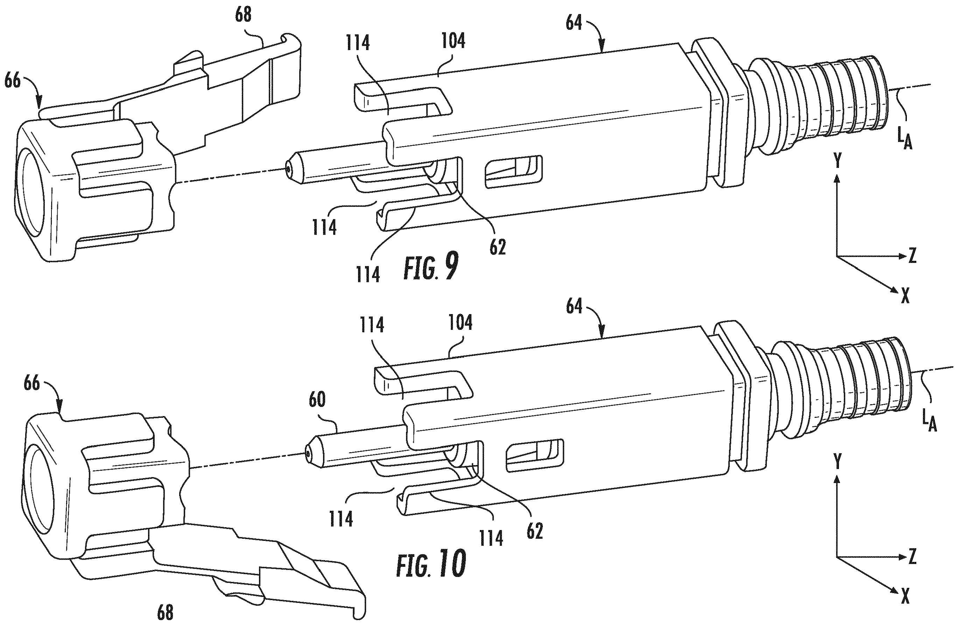

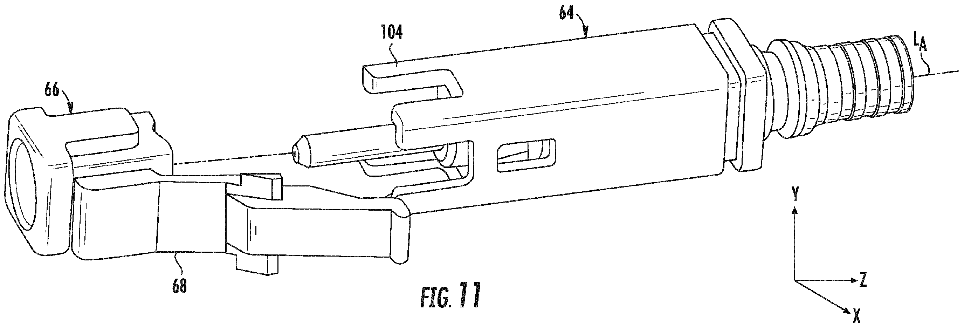

FIGS. 5, 9, 10, and 11 are perspective views showing the different possible orientations of the housing cap 66 relative the longitudinal axis L_{A} of the housing body 64. The orientations are considered as "possible orientations" in the sense that they each allow the housing cap 66 to be received by and/or secured to the housing body 64 in a similar manner so that the physical attributes of the connector 50 for intermatability remain the same when the housing cap 66 is secured to the housing body 64 in one of the possible orientations. In the embodiment shown, there are four possible orientations due to the four-fold symmetry of the housing body 64. In alternative embodiments, the housing body 64 and housing cap 66 may be designed so that there are fewer possible orientations (e.g., two possible orientations) or a greater number of possible orientations (i.e., more than four possible orientations).

The embodiment shown and tuning method described gives rise to the scatter plot of FIG. 8B, wherein all of the locations of the fiber core can be considered to effectively reside in a single quadrant Q, e.g., quadrant Q1 as shown. This means that for any pair of cable assemblies 54, the optical connection established between respective connectors 50 will have a greater coupling efficiency on average than in the case where the housing cap 66 is secured to the housing body 64 without regard to the fiber core location, i.e., in a non-tuned configuration. This is because the fiber core locations, on average, will be closer together in the tuned configuration as compared to the non-tuned configuration.

It will be apparent to those skilled in the art that various modifications to the embodiments described above can be made without departing from the spirit or scope of the disclosure as defined in the claims below. For example, although each of the sidewalls 122 of the housing cap 66 includes a tab 124 in the embodiment described above, in alternative embodiments only the sidewall 122 from which the latch arm 68 extends may include a tab 124. Embodiments are also possible where none of the sidewalls 122 include a tab, with the latch arm 68 extending directly from one of the sidewalls 122 in such embodiments. Additionally, in some alternative embodiments, the housing body 64 and housing cap 66 may be designed so that portions of the housing cap 66 are not received in the internal cavity 98 of the housing body 64 (i.e., no overlap between the front-end section 104 of the housing body 64 and sidewalls of the housing cap 66). Furthermore, although the sides 112 of the housing body 64 in the embodiment described above are substantially identical in at least the front-end section 104, in some embodiments the sides 112 may not be substantially identical yet still configured so that the housing cap 66 can be secured to the housing body 64 in several possible orientations.

It will also be apparent to those skilled in the art that unless otherwise expressly stated, it is in no way intended that any method in this disclosure be construed as requiring that its steps be performed in a specific order. Accordingly, where a method claim below does not actually recite an order to be followed by its steps or it is not otherwise specifically stated in the claims or descriptions that the steps are to be limited to a specific order, it is no way intended that any particular order be inferred.

## Claims

1. A fiber optic cable assembly, comprising:
a fiber optic cable including at least one optical fiber; and
a fiber optic connector installed on the at least one optical fiber, the fiber optic connector comprising:
a ferrule having a ferrule front end, a ferrule back end, and an axial bore in which one of the at least one optical fiber is secured;
a housing body in which the ferrule is partially received and having a front-end section with at least four sides, wherein the ferrule front end extends beyond the front-end section of the housing body and the ferrule back end is positioned within the housing body; and
a housing cap secured to the front-end section of the housing body in one of several possible orientations of the housing cap relative to a longitudinal axis of the housing body;
wherein:
the housing cap includes an opening through which the ferrule extends, at least one sidewall, and a latch arm extending from the at least one sidewall; and
the housing body is shaped to receive the housing cap with the latch arm extending over a different one of the at least four sides of the front-end section of the housing body in each of the several possible orientations.

2. The fiber optic cable assembly of claim 1, wherein the at least four sides of the front-end section of the housing body render the front-end section at least four-fold symmetric relative to the longitudinal axis.

3. The fiber optic cable assembly of either claim 1 or 2, wherein the at least four sides of the front-end section of the housing body are substantially identical.

4. The fiber optic cable assembly of any of claims 1-3, wherein the several possible orientations consists of four possible orientations.

5. The fiber optic cable assembly of any of claims 1-4, wherein the front-end section of the housing body extends over at least a portion of the at least one sidewall of the housing cap.

6. The fiber optic cable assembly of any of claims 1-5, wherein:
the front-end section of the housing body defines a front end of the housing body and includes a plurality slots extending from the front end of the housing body; and
the at least one sidewall of the housing cap includes a plurality of tabs each received in one of the plurality of slots in the front-end section of the housing body.

7. The fiber optic cable assembly of claim 6, wherein the latch arm of the housing cap extends from one of the plurality of tabs.

8. The fiber optic cable assembly of either claim 6 or 7, wherein the plurality of slots in the front-end section of the housing body comprises at least four slots each extending in one of the at least four sides of the front-end section.

9. The fiber optic cable assembly of claim 8, wherein:
the at least one sidewall of the housing cap comprises at least four sidewalls; and
the at least one tab comprises at least four tabs, with each of the at least four sidewalls including one of the at least four tabs.

10. The fiber optic cable assembly of any of claims 6-9, further comprising a ferrule holder secured to a back portion of the ferrule that defines the ferrule back end, wherein:
the ferrule holder cooperates with the housing body to position the back portion of the ferrule within the housing body;
the ferrule has a front portion length defined between the ferrule front end and the ferrule holder; and
the housing body is shaped so that at least 75% of the front portion length of the ferrule is exposed when viewed: a) in a direction perpendicular to the longitudinal axis and through one of the plurality of slots, and b) before the housing cap is secured to the housing body.

11. The fiber optic cable assembly of claim 10, wherein the housing body is shaped so that the entire front portion length is exposed when viewed: a) in a direction perpendicular to the longitudinal axis and through one of the plurality of slots, and b) before the housing cap is secured to the housing body.

12. The fiber optic cable assembly of any of claims 1-11, wherein the housing cap is secured to the housing body by at least one of the following: an adhesive, a friction fit, an interference fit, or a fusion joint.

13. The fiber optic cable assembly of any of claims 1-11, wherein housing cap is fused to the housing body.

14. The fiber optic cable assembly of any of claims 1-13, wherein the housing body comprises a first material and the housing cap comprises a second material that has different energy absorption properties than the first material.

15. A method of tuning a fiber optic connector during the manufacture of a fiber optic cable assembly, comprising:
securing a ferrule of the fiber optic connector to an optical fiber of a fiber optic cable, wherein the ferrule includes a ferrule front end, a ferrule back end, and an axial bore in which the optical fiber is received;
forming a sub-assembly that includes a housing body in which the ferrule back end is retained, wherein the ferrule front end extends beyond a front end of the housing body in the sub-assembly;
determining a position of a core of the optical fiber relative to a center of the ferrule; and
securing a housing cap to the housing body in one of several possible orientations of the housing cap relative to a longitudinal axis of the housing body;
wherein:
securing the housing cap includes selecting the one of the several possible orientations based on the position of the core of the optical fiber; and
the housing cap includes a latch arm that extends over a different side of the housing body in each of the several possible orientations.
